(19) Europäisches Patentamt
European Patent Office
Office européen des brevets

(11) **EP 3 675 351 A1**

(12) **EUROPEAN PATENT APPLICATION**
published in accordance with Art. 153(4) EPC

(43) Date of publication:
**01.07.2020 Bulletin 2020/27**

(51) Int Cl.:
**H02P 21/05** (2006.01)          **H02P 27/08** (2006.01)

(21) Application number: **19746799.6**

(86) International application number:
**PCT/JP2019/001003**

(22) Date of filing: **16.01.2019**

(87) International publication number:
**WO 2019/150945 (08.08.2019 Gazette 2019/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.01.2018   JP 2018013834**

(71) Applicant: **NSK LTD.**
**Shinagawa-Ku**
**Tokyo 141-8560 (JP)**

(72) Inventors:
• **TAKASE Hiroaki**
  **Tokyo 141-8560 (JP)**
• **MINAKI Ryo**
  **Tokyo 141-8560 (JP)**
• **SAWADA Hideki**
  **Tokyo 141-8560 (JP)**
• **SUGAWARA Takayoshi**
  **Tokyo 141-8560 (JP)**

(74) Representative: **Arnold & Siedsma**
**Bezuidenhoutseweg 57**
**2594 AC The Hague (NL)**

(54) **ELECTRIC POWER STEERING DEVICE**

(57)     [Problem]

An object of the present invention is to provide a vector-control type electric power steering apparatus that compensates a dead time of an inverter without a tuning operation, improves a distortion of a current waveform and a responsibility of the current control, and suppresses a sound, a vibration and a torque ripple.

[Means for solving the problem]

The present invention is the vector-control type electric power steering apparatus that converts dq-phase current command values into 3-phase duty command values, drives and controls a 3-phase brushless motor by a pulse width modulation controlled inverter, and applies an assist torque to a steering mechanism of a vehicle, comprising: a temperature coefficient calculating section to calculate a temperature coefficient depending on a temperature of a control section including the inverter, wherein a dead time compensation of the inverter is performed by estimating compensation signs of 3-phase current model command values in which the dq-phase current command values are converted into a 3-phase current command value model, calculating a first dead time compensation amount based on an inverter applying voltage, calculating a second dead time compensation amount by multiplying the first dead time compensation amount by the temperature coefficient, and adding 2-phase dead time compensation values in which values multiplied the second dead time compensation amount by the compensation signs are converted into 2-phase values, to dq-phase voltage command values.

**Description**

Technical Field

The present invention relates to an electric power steering apparatus that vector-controls a driving of a 3-phase brushless motor on a dq-phase rotational coordinate system, performs a dead time compensation of an inverter based on a current command value model that dq-phase current command values are converted into 3-phase values, by correcting a dead time compensation amount, which is calculated at an inverter applying voltage-sensitive compensation-amount calculating section depending on a temperature of a control section (a temperature of the inverter or a temperature in the neighborhood of the inverter), processing the temperature-corrected dead time compensation amount using compensation signs based on the dq-phase current command values and adding the processed values to dq-phase voltage command values or 3-phase voltage command values, and enables to perform a smooth assist control without a steering sound.

Background Art

There exists an electric power steering apparatus (EPS) which provides a steering mechanism of a vehicle with a steering assist torque (an assist torque) by means of a rotational torque of a motor. The electric power steering apparatus applies a driving force of the motor as an actuator to a steering shaft or a rack shaft by means of a transmission mechanism such as gears or a belt through a reduction mechanism. In order to accurately generate the steering assist torque, such a conventional electric power steering apparatus performs a feed-back control of a motor current. The feed-back control adjusts a voltage supplied to the motor so that a difference between a steering assist command value (a current command value) and a detected motor current value becomes small, and the adjustment of the voltage supplied to the motor is generally performed by an adjustment of duty command values of a pulse width modulation (PWM) control.

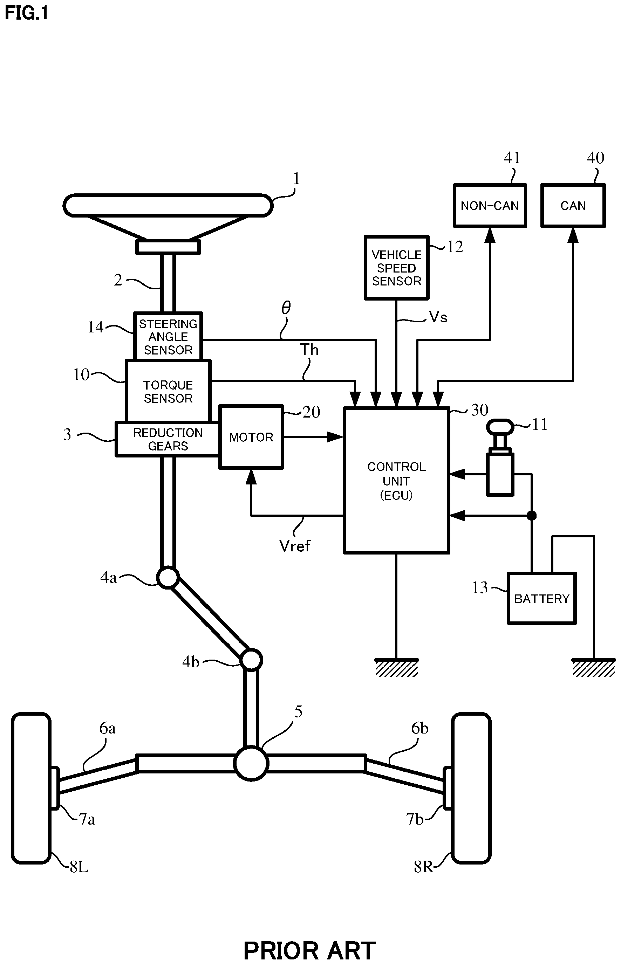

A general configuration of the conventional electric power steering apparatus will be described with reference to FIG.1. As shown in FIG.1, a column shaft (a steering shaft or a handle shaft) 2 connected to a handle (a steering wheel) 1 is connected to steered wheels 8L and 8R through reduction gears 3, universal joints 4a and 4b, a pinion-and-rack mechanism 5, and tie rods 6a and 6b, further via hub units 7a and 7b. In addition, the steering shaft 2 is provided with a steering angle sensor 14 for detecting a steering angle θ and a torque sensor 10 for detecting a steering torque Th of the handle 1, and a motor 20 for assisting the steering torque of the handle 1 is connected to the column shaft 2 through the reduction gears 3. The electric power is supplied a control unit (ECU) 30 for controlling the electric power steering apparatus from a battery 13, and an ignition key signal is inputted into the control unit 30 through an ignition key 11. The control unit 30 calculates a current command value of an assist command (a steering assist command) on the basis of the steering torque Th detected by the torque sensor 10 and a vehicle speed Vs detected by a vehicle speed sensor 12, and controls a current supplied to the motor 20 by means of a voltage control command value Vref obtained by performing a compensation or the like to the calculated current command value. A steering angle sensor 14 is not indispensable and may not be It is possible to obtain the steering angle (a motor rotational angle) θ from a rotational sensor such as a resolver which is connected to the motor 20.

A controller area network (CAN) 40 to send/receive various information and signals of the vehicle is connected to the control unit 30, and it is also possible to receive the vehicle speed Vs from the CAN 40. Further, a Non-CAN 41 is also possible to connect to the control unit 30, and the Non-CAN 41 sends and receives a communication, analogue/digital signals, electric wave or the like except for the CAN 40.

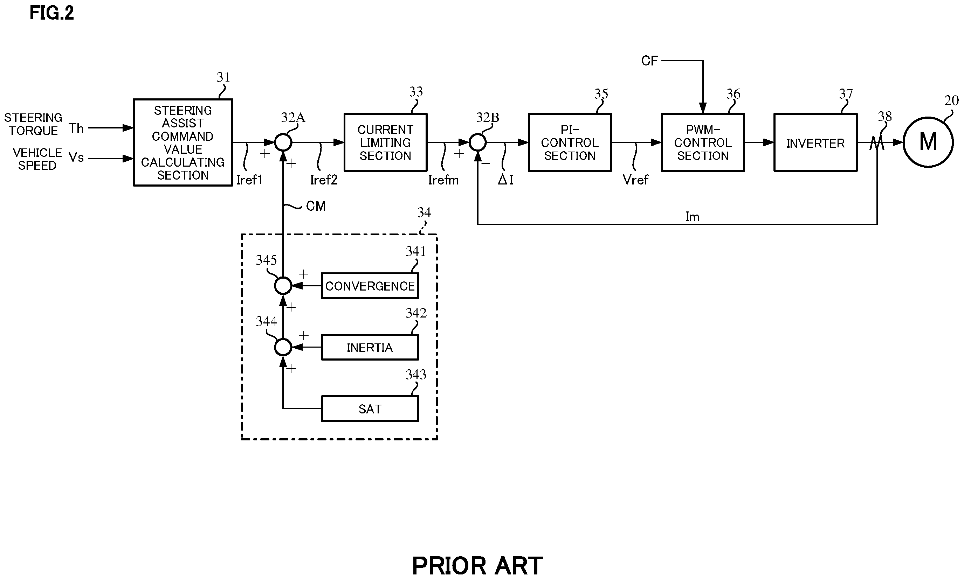

In such an electric power steering apparatus, the control unit 30 mainly comprises a central processing unit (CPU) (including a micro processor unit (MPU), a micro controller unit (MCU) and so on), and general functions performed by programs within the CPU are, for example, shown in FIG.2.

Functions and operations of the control unit 30 will be described with reference to FIG.2. The steering torque Th from the torque sensor 10 and the vehicle speed Vs from the vehicle speed sensor 12 are inputted into a steering assist command value calculating section 31. The steering assist command value calculating section 31 calculates a steering assist command value Iref1 based on the steering torque Th and the vehicle speed Vs using an assist map or the like. The calculated steering assist command value Iref1 is added with a compensation signal CM for improving characteristics from a compensating section 34 at an adding section 32A. The steering assist command value Iref2 after addition is limited of the maximum value thereof at a current limiting section 33. The current command value Irefm whose maximum value is limited is inputted into a subtracting section 32B, whereat a detected motor current value Im is subtracted from the current command value Irefm.

A current control such as a proportional integral (PI) is performed to a deviation ΔI (= Irefm - Im), which is the subtracted result at the subtracting section 32B, at a PI-control section 35. The voltage control command value Vref obtained by the current control, and a modulation signal (a triangle wave carrier) CF are inputted into a PWM-control section 36, and duty command values are calculated. The motor 20 is PWM-driven by an inverter 37 with PWM-signals calculated from the duty command values. The motor current value Im of the motor 20 is detected by a motor current detector 38 and is inputted into the subtracting section 32B for the feed-back.

The compensating section 34 adds a detected or estimated self-aligning torque (SAT) to an inertia compensation value 342 at an adding section 344. The added result is further added with a convergence control value 341 at an adding section 345. The added result is inputted into the adding section 32A as the compensation signal CM and the control characteristics are improved.

Recently, the 3-phase brushless motor is mainly used as an actuator of the electric power steering apparatus, and since the electric power steering apparatus is automotive products, the operating temperature range is wide. Further, from a view point of a fail-safe, a dead time of the inverter to drive the motor needs greater (industrial equipment < EPS) than that for general industrial purpose products such as home appliances. Generally, since a switching device (for example, a field-effect transistor (FET)) has a delay time when the operation is turned-OFF, a direct current link is shorted when the switching devices of an upper-arm and a lower-arm simultaneously switches a turned-OFF operation and a turned-ON operation. In order to prevent the above problem, a time (a dead time) that the operations of the switching devices of both arms are turned-OFF, is set.

As a result, a current waveform is distorted, and a responsibility of the current control and a steering feeling are badly affected. For example, when the driver slowly steers the handle in a situation that the handle is around a straight running state (an on-center state), a discontinuous steering feeling by means of the torque ripple and like is occurred. Because a back electromotive force (a back-EMF) of the motor in a medium speed steering or a high speed steering, and the interference voltage between the windings operate as the disturbance against the current control, a steering follow-up performance and the steering feeling in a turn-back steering are badly affected. The steering sound in the medium speed steering or the high speed steering becomes louder.

A q-phase that is a coordinate axis of the rotor of the 3-phase brushless motor and controls the torque of the rotor of the 3-phase brushless motor, and a d-phase that controls strength of a magnetic field are independently set. Since the d-phase crosses at 90° against the q-phase, the vector control system that controls the vectors corresponding to the respective phase currents (a d-phase current command value and a q-phase current command value) is known.

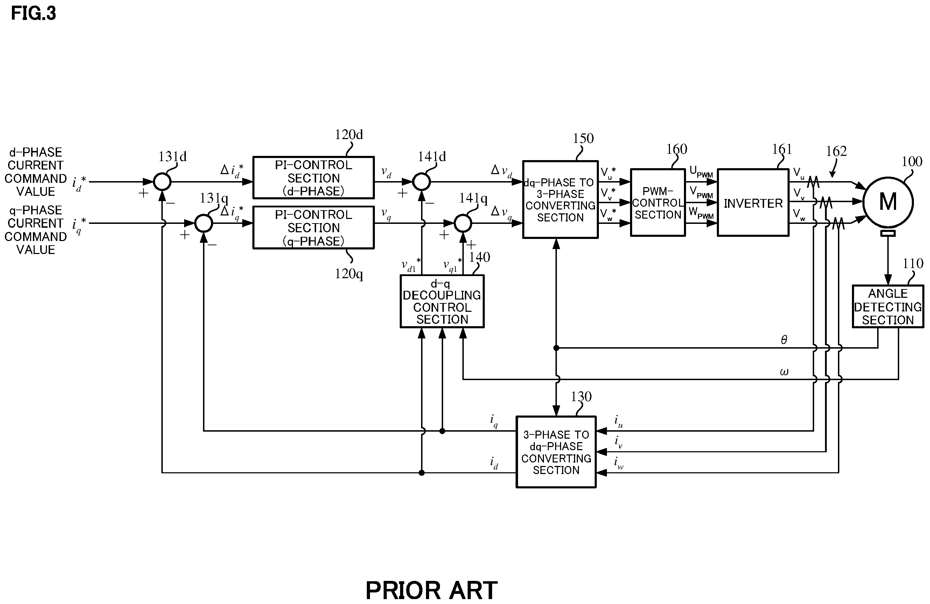

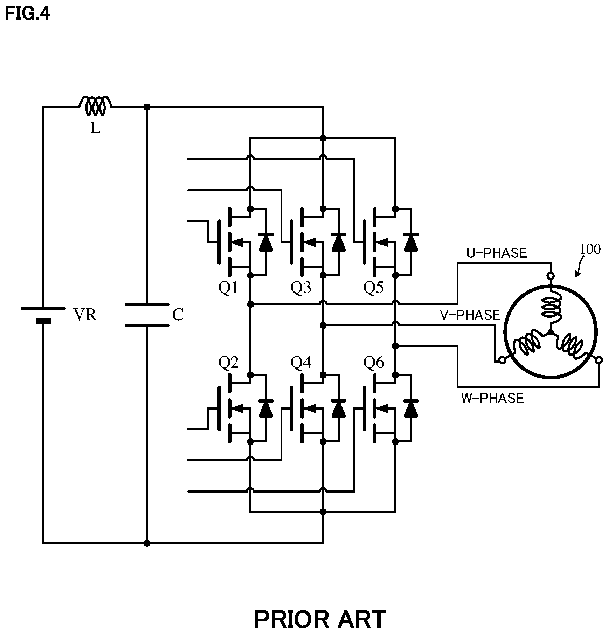

FIG.3 shows a configuration example of driving and controlling the 3-phase brushless motor 100 by using the vector control system. 2-phase steering assist command values (steering assist command values on the dq-phase coordinate system) are calculated at a steering assist command value calculating section (not shown) based on the steering torque Th, the vehicle speed Vs and the like. The d-phase current command value $i_d{}^*$ and the q-phase current command value $i_q{}^*$ whose max values are limited are inputted into the subtracting sections 131d and 131q, respectively. The current deviations $\Delta i_d{}^*$ and $\Delta i_q{}^*$ that are calculated at the subtracting sections 131d and 131q are inputted into the proportional integral control sections (PI-control sections) 120d and 120q, respectively. The voltage command values $v_d$ and $v_q$ that are PI-controlled at the PI-control sections 120d and 120q are inputted into the subtracting section 141d and the adding section 141q, respectively. Command voltages $\Delta v_d$ and $\Delta v_q$ that are calculated at the subtracting section 141d and the adding section 141q are inputted into a dq-phase to 3-phase converting section 150. The voltage command values Vu*, Vv* and Vw* that are converted into the three phases at the dq-phase to 3-phase converting section 150 are inputted into the PWM-control section 160. The motor 100 is driven by PWM-signals ($U_{PWM}$, $V_{PWM}$ and $W_{PWM}$) based on the calculated 3-phase duty command values via the inverter (inverter applying voltage VR) 161 constituted by a bridge configuration of an upper-arm and a lower-arm as shown in FIG.4. The upper-arm comprises FETs Q1, Q3 and Q5 serving as switching devices and the lower-arm comprises FETs Q2, Q4 and Q6.

3-phase motor currents $i_u$, $i_v$ and $i_w$ of the motor 100 are detected at the current detector 162, and the detected 3-phase currents $i_u$, $i_v$ and $i_w$ are inputted into the 3-phase to dq-phase converting section 130. The 2-phase feed-back currents $i_d$ and $i_q$ that are converted at the 3-phase to dq-phase converting section 130 are subtraction-inputted into the subtracting sections 131d and 131q, and a d-q decoupling control section 140. The rotational sensor or the like is attached to the motor 100, and the motor rotational angle $\theta$ and the motor angular velocity (the motor rotational velocity) $\omega$ are outputted from the angle detecting section 110 that processes a sensor signal. The motor rotational angle $\theta$ is inputted into the dq-phase to 3-phase converting section 150 and the 3-phase to dq-phase converting section 130, and the motor angular velocity $\omega$ is inputted into the d-q decoupling control section 140. 2-phase voltages $v_{d1}{}^*$ and $v_{q1}{}^*$ from the d-q decoupling control section 140 are inputted into the subtracting section 141d and the adding section 141q, respectively. The voltage command value $\Delta v_d$ calculated at the subtracting section 141d and the voltage command value $\Delta v_q$ calculated at the adding section 141q are inputted into the dq-phase to 3-phase converting section 150.

Such a vector-control type electric power steering apparatus described above is an apparatus to assist a steering of the driver, and a sound and a vibration of the motor, a torque ripple and the like are transmitted to the driver as a force sense via the handle. The field-effect transistors (FETs) are generally used as a power device to drive the inverter, and the current is applied to the motor. In a case that the 3-phase motor is used, the FETs, which are connected in series for respective phases, of the upper-arm and the lower-arm are used as shown in FIG.4. Although the FETs of the upper-arm and the lower-arm are alternatively turned-ON and turned-OFF, the FETs do not simultaneously turn-ON and turn-OFF in accordance with gate signals since the FET is not an ideal switching device. Therefore, a turn-ON time and a turn-OFF time are needed. Consequently, if an ON-command for the upper-arm FET and an OFF-command for the lower-arm FET are simultaneously inputted, there is a problem that the upper-arm FET and the lower-arm FET simultaneously turn-ON and the upper-arm and the lower-arm become short circuit. There is a difference between the turn-ON time and the turn-OFF time of the FET. Thus, when the command is inputted into the FETs at the same time, the FET immediately turns-ON in a case that the turn-ON time is short (for example, 100[ns]) by inputting the ON-command to the upper-arm FET, and reversely, the FET does not immediately turn-OFF in a case that the turn-OFF time is long (for example, 400[ns]) by inputting the OFF-command to the lower-arm FET. In this way, a state (for example, between 400[ns] - 100[ns], ON-ON) that the upper-arm FET is "ON" and the lower-arm FET is "ON", often momentarily occurs.

In this connection, in order that the upper-arm FET and the lower-arm FET do not simultaneously turn-ON, the ON-signal is usually given to the gate driving circuit with a predetermined period being a dead time. Since the dead time is nonlinear, the current waveform is distorted, the response performance of the control is badly affected and the sound, the vibration and the torque ripple are generated. In a column type electric power steering apparatus, since an arrangement of the motor directly connected to a gear box which is connected by the handle and the column shaft made of steel is extremely near the driver in the mechanism, it is necessary to especially consider the sound, the vibration, the torque ripple and the like due to the motor in comparison with a downstream type electric power steering apparatus.

Conventionally, as a method to compensate the dead time of the inverter, there are methods to add the compensation value to the dead time by detecting a timing occurring the dead time or to compensate the dead time by a disturbance observer on the dq-phase in the current control.

The electric power steering apparatus to compensate the dead time of the inverter is disclosed in, for example, Japanese Patent No.4681453 B2 (Patent Document 1) and Japanese Unexamined Patent Publication No.2015-171251 A (Patent Document 2). In Patent Document 1, there is provided a dead band compensation circuit that generates a model current based on the current command values by inputting the current command values into a reference model circuit of the current control loop including the motor and the inverter, and compensates the influence of the dead time of the inverter based on the model current. Further, in Patent Document 2, there is provided a dead time compensating section to correct the duty command values based on the dead time compensation values, and the dead time compensating section comprises a basic compensation value calculating section to calculate a basic compensation value being a basic value of the dead time compensation values based on the current command values and a filtering section to perform a filtering-process corresponding to a low pass filter (LPF) for the basic compensation value.

The List of Prior Art Documents

Patent Documents

Patent Document 1: Japanese Patent No.4681453 B2
Patent Document 2: Japanese Unexamined Patent Publication No.2015-171251 A

Summary of the Invention

Problems to be Solved by the Invention

The apparatus disclosed in Patent Document 1 is a system that estimates the compensation signs by using a calculation of the dead time compensation amount due to the q-phase current command value and the 3-phase current reference model. The output value of the compensation circuit is a changing value in proportion to the model current in a region being a predetermined fixed value or less, and is an added value of the changing values in proportion to the fixed value and the model current in a region being the predetermined fixed value or more. In this way, the output value of the compensation circuit is outputted from the current command to the voltage command. However, the tuning operation for determining the hysteresis characteristic to output the predetermined fixed value is necessary.

Further, in the apparatus disclosed in Patent Document 2, when the dead time is determined, the dead time compensation is performed by using the q-phase current command value and the compensation value in which the q-phase current command value is LPF-processed. Thus, the delay occurs, and there is a problem that the dead time compensation value is not operated for the final voltage command to the motor.

The present invention has been developed in view of the above-described circumstances, and an object of the present invention is to provide the vector-control type electric power steering apparatus that compensates the dead time of the inverter depending on the temperature of the control section (ECU) without the tuning operation, improves the distortion of the current waveform and the responsibility of the current control, and suppresses the sound and the vibration of the motor and the torque ripple.

Means for Solving the Problems

The present invention relates to a vector-control type electric power steering apparatus that converts dq-phase current command values calculated based on at least a steering torque into 3-phase duty command values, drives and controls a 3-phase brushless motor by a pulse width modulation (PWM) controlled inverter, and applies an assist torque to a steering mechanism of a vehicle, the above-described object of the present invention is achieved by that: comprising a temperature coefficient calculating section to calculate a temperature coefficient depending on a temperature of a control section including the inverter, wherein a dead time compensation of the inverter is performed by estimating compensation signs of 3-phase current model command values in which the dq-phase current command values are converted into a 3-phase current command value model, calculating a first dead time compensation amount based on an inverter applying voltage, calculating a second dead time compensation amount by multiplying the first dead time compensation amount by the temperature coefficient, and adding dead time compensation values in which values multiplied the second dead time compensation amount by the compensation signs are converted into 2-phase values, to dq-phase voltage command values; or
comprising a temperature coefficient calculating section to calculate a temperature coefficient depending on a temperature of a control section including the inverter, wherein a dead time compensation of the inverter is performed by estimating compensation signs of 3-phase current model command values in which the dq-phase current command values are converted into a 3-phase current command value model, calculating a first dead time compensation amount based on an inverter applying voltage, calculating a second dead time compensation amount by multiplying the first dead time compensation amount by the temperature coefficient, and adding dead time compensation values in which the second dead time compensation amount is multiplied by the compensation signs, to 3-phase voltage command values.

Effects of the Invention

According to the electric power steering apparatus of the present invention, the dead time of the inverter is compensated by converting the dq-phase current command values into the 3-phase current model command values, estimating the compensation signs, correcting the dead time compensation amount obtained from the inverter applying voltage depending on the temperature of the control section (ECU), calculating the dead time compensation values based on the temperature-corrected dead time compensation amount and the compensation signs, and converting the dead time compensation values into the 2-phase values and adding (feed-forwarding) the 2-phase values to the dq-phase voltage command values, or adding (feed-forwarding) the dead time compensation values to the 3-phase voltage command values. Thereby, the electric power steering apparatus compensates the dead time of the inverter which is corrected depending on the temperature of the control section (ECU), on the dq-phase or on the 3-phase without the tuning operation, and improves the distortion of the current waveform and the responsibility of the current control.
Since the control is smoothly performed by using the feed-forward compensation of the dead time based on the dq-phase current command values, the sound and the vibration of the motor and the torque ripple can be suppressed. The present invention has an advantage that the compensation can simply be performed since the phase deviation is small even in the high speed steering region. Because the compensation method is not changed even in the d-phase control, the present invention can simply be performed in the d-phase control.
In a case of entering the d-phase control, it can be considered that the compensation logics are switched depending on the condition whether the d-phase current command value is existed or not, and the compensation is performed by using the dedicated logic for the d-phase. However, in the present invention, since the calculation of the current command value model includes the d-phase current command value, when the d-phase current command value is equal to zero, the 3-phase current model command values which are calculated under the condition that the d-phase current command value is equal to zero are outputted. In a case that the d-phase current command value is not equal to zero, because the 3-phase current model command values are outputted depending on the d-phase current command value and the q-phase current command value, the dedicated logic for the d-phase is not required. Since the calculation method of the present invention is not changed depending on the condition whether the d-phase current command value is existed or not, the compensation can be performed without switching the logics and the additional logic.

Brief Description of the Drawings

In the accompanying drawings:

FIG.1 is a configuration diagram showing a general outline of an electric power steering apparatus;
FIG.2 is a block diagram showing a configuration example of a control system of the electric power steering apparatus;

FIG.3 is a block diagram showing a configuration example of a vector control system;
FIG.4 is a wiring diagram showing a configuration example of a general inverter;
FIG.5 is a block diagram showing a configuration example (the first embodiment) of the present invention;
FIG.6 is a characteristic diagram showing one example of a characteristic of a phase adjusting section;
FIG.7 is a block diagram showing a configuration example of an inverter applying voltage-sensitive compensation-amount calculating section;
FIG.8 is a characteristic diagram showing a characteristic example of the inverter applying voltage-sensitive compensation-amount calculating section;
FIG.9 is a characteristic diagram showing a characteristic example of a temperature coefficient calculating section;
FIG.10 is a characteristic diagram showing a setting example of the temperature coefficient;
FIG.11 is a waveform chart showing one example of an output waveform of a 3-phase current command value model;
FIGs.12A and 12B are waveform charts showing an operation example of a phase current compensation sign estimating section;
FIG.13 is a block diagram showing a configuration example of a space vector modulating section;
FIG.14 is a diagram showing an operation example of the space vector modulating section;
FIG.15 is a diagram showing an operation example of the space vector modulating section;
FIG.16 is a timing chart showing an operation example of the space vector modulating section;
FIG.17 is a waveform chart showing an effect of the space vector modulating section;
FIGs.I8A, 18B and 18C are waveform charts showing an effect of the present invention (the first embodiment);
FIGs.19A, 19B and 19C are waveform charts showing an effect of the present invention (the first embodiment);
FIGs.20A, 20B and 20C are waveform charts showing an effect of the present invention (the first embodiment);
FIGs.21A, 21B and 21C are waveform charts showing an effect of the present invention (the first embodiment);
FIGs.22A, 22B and 22C are waveform charts showing an effect of the present invention (the first embodiment);
FIGs.23A, 23B and 23C are waveform charts showing an effect of the present invention (the first embodiment);
FIG.24 is a block diagram showing a configuration example (the second embodiment) of the present invention;
FIG.25 is a waveform chart showing an effect of the present invention (the second embodiment); and
FIG.26 is a waveform chart showing an effect of the present invention (the second embodiment).

Mode for Carrying Out the Invention

In order to resolve problems that a current distortion and a torque ripple occur and a steering sound becomes louder due to an influence of a dead time of an inverter in a control section (ECU), the present invention performs a dead time compensation by converting dq-phase current command values into 3-phase current model command values, estimating compensation signs, calculating a dead time compensation amount which is calculated from an inverter applying voltage and is corrected depending on a temperature of the ECU, calculating dead time compensation values based on the dead time compensation amount and the estimated compensation signs, and converting the dead time compensation values into 2-phase values and adding (feed-forwarding) the 2-phase values to dq-phase voltage command values (the first embodiment), or adding (feed-forwarding) the dead time compensation values to 3-phase voltage command values (the second embodiment). Thereby, the electric power steering apparatus compensates the dead time of the inverter on the dq-phase or on the 3-phase without a tuning operation, and improves the distortion of the current waveform and the responsibility of the current control.
Embodiments of the present invention will be described with reference to the accompanying drawings as follows.

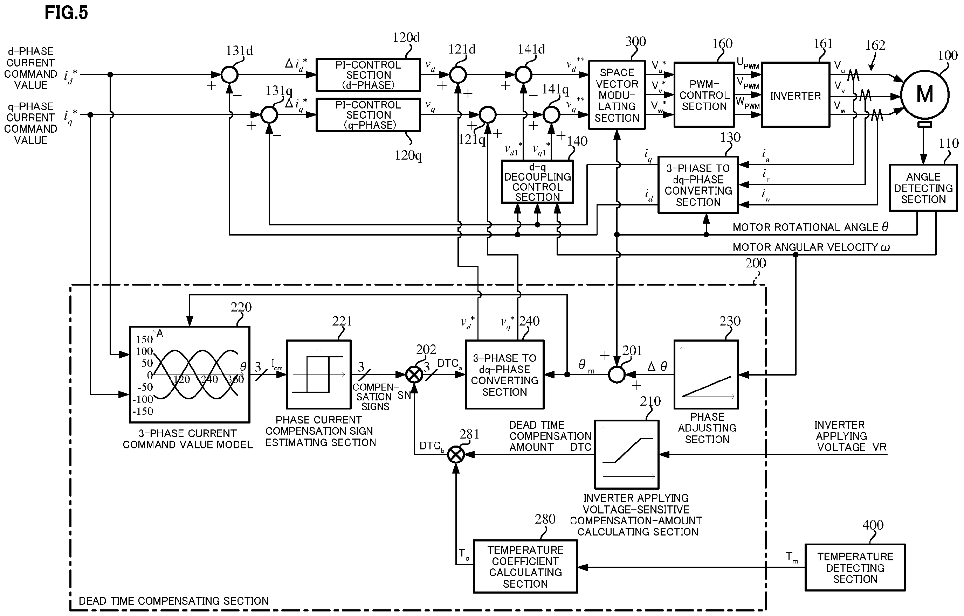

FIG.5 shows an overall configuration of the present invention (the first embodiment) corresponding to FIG.3, and there is provided a dead time compensating section 200 to calculate dq-phase dead time compensation values $v_q^*$ and $v_q^*$. A d-phase current command value $i_d^*$ and a q-phase current command value $i_q^*$, a motor rotational angle $\theta$ and a motor angular velocity $\omega$ are inputted into the dead time compensating section 200. The inverter applying voltage VR applied to the inverter 161 is also inputted into the dead time compensating section 200. In the present invention, there is provided a temperature detecting section 400 to detect (or estimate) a temperature of a power device such as FETs of the control section (ECU) or a temperature neighborhood of the power device of the control section (ECU), and the temperature Tm detected at the temperature detecting section 400 is inputted into the dead time compensating section 200.
The d-phase current command value $i_d^*$ and the q-phase current command value $i_q^*$ in which the maximum values of the steering assist command values calculated at a steering assist command value calculating section (not shown) are limited are respectively inputted into subtracting sections 131d and 131q, and a current deviation $\Delta i_d^*$ between the d-phase current command value $i_d^*$ and the feed-back current $i_d$ and a current deviation $\Delta i_q^*$ between the q-phase current command value $i_q^*$ and the feed-back current $i_q$ are respectively calculated at the subtracting sections 131d and 131q. The calculated current deviation $\Delta i_d^*$ is inputted into a PI-control section 120d, and the calculated current deviation $\Delta i_q^*$ is inputted into a PI-control section 120q. The PI-controlled d-phase voltage command value $v_d$ and the PI-controlled q-phase voltage command value $v_q$ are respectively inputted into adding sections 121d and 121q, and are compensated by respectively adding to the dead time compensation values $v_d^*$ and $v_q^*$ from the dead time compensating section 200 described below. The compensated voltage values are inputted into a subtracting section 141d and an adding section 141q, respectively. The voltage $v_{d1}^*$ from a d-q decoupling control section 140 is inputted into the subtracting section 141d and a d-phase voltage command value $v_d^{**}$ which is the difference is obtained at the subtracting section 141d. The voltage $v_{q1}^*$ from the d-q decoupling control section 140 is inputted into the adding section 141q and a q-phase voltage command value $v_q^{**}$ which is the added result is obtained at the adding section 141q. The voltage command values $v_d^{**}$ and $v_q^{**}$ whose dead time is compensated are inputted into a space vector modulating section 300, and converted from 2-phase values on the dq-phase into 3-phase values constituted by U-phase, V-phase and W-phase, in which the third-harmonic is superimposed. The 3-phase voltage command values Vu*, Vv* and Vw* which are vector-modulated at the space vector modulating section 300 are inputted into a PWM-control section 160, and the motor 100 is driven and controlled via the PWM-control section 160 and the inverter 161 as described above.

Next, the dead time compensating section 200 will be described.

The dead time compensating section 200 comprises an adding section 201, multiplying sections 202 and 281, an inverter applying voltage-sensitive compensation-amount calculating section 210, a 3-phase current command value model 220, a phase current compensation sign estimating section 221, a phase adjusting section 230, a 3-phase to dq-phase converting section 240, and a temperature coefficient calculating section 280. As well, a dead time compensation value outputting section comprises the multiplying section 202 and the 3-phase to dq-phase converting section 240. A motor rotational angle θ is inputted into an adding section 201 and a motor angular velocity ω is inputted into a phase adjusting section 230. An inverter applying voltage VR is inputted into the inverter applying voltage-sensitive compensation-amount calculating section 210, and a phase-adjusted motor rotational angle $θ_m$ calculated at the adding section 201 is inputted into the 3-phase current command value model 220.

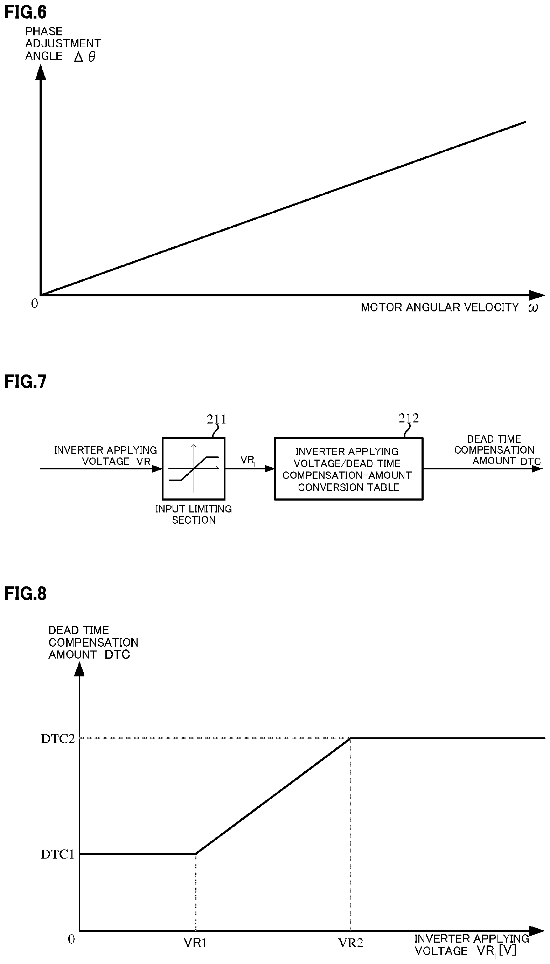

In a case that the dead time compensation timing is hastened or is delayed in response to the motor angular velocity ω, there is provided the phase adjusting section 230 which has a function for calculating the adjustment angle depending on the motor angular velocity ω. The phase adjusting section 230 has a characteristic as shown in FIG.6 in a case of a lead angle control. The calculated phase adjustment angle Δθ is inputted into the adding section 201 and is added to the detected motor rotational angle θ. The phase-adjusted motor rotational angle $θ_m$ (= θ + Δθ) that is an added result of the adding section 201 is inputted into the 3-phase current command value model 220 and the 3-phase to dq-phase converting section 240.

After detecting a motor electric angle and calculating the duty command values, a time delay whose time is several tens of microseconds to one hundred microseconds is existed until actually correcting the PWM-signals. Since the motor is rotating during the delay time, a phase deviation between the motor electric angle in the calculation and the motor electric angle in the correction is generated. In order to compensate this phase deviation, the lead angle is performed depending on the motor angular velocity ω and the phase is adjusted.

Since the optimal dead time compensation amount varies depending on the inverter applying voltage VR, the present invention calculates the dead time compensation amount DTC depending on the inverter applying voltage VR and makes the dead time compensation amount DTC be changeable. The configuration of the inverter applying voltage-sensitive compensation-amount calculating section 210 to output the dead time compensation amount DTC by inputting the inverter applying voltage VR is shown in FIG.7. The positive maximum value and the negative maximum value of the inverter applying voltage VR are limited in an input limiting section 211 and the inverter applying voltage $VR_l$ whose maximum value is limited is inputted into an inverter applying voltage/dead time compensation-amount conversion table 212.

The characteristic of the inverter applying voltage/dead time compensation-amount conversion table 212 is shown, for example, in FIG.8. That is, the outputted dead time compensation amount DTC is a constant dead time compensation amount DTC1 when the inverter applying voltage VR is lower than a predetermined inverter applying voltage VR1, linearly (or nonlinearly) increases when the inverter applying voltage VR is equal to or higher than the predetermined inverter applying voltage VR1 and is lower than a predetermined inverter applying voltage VR2 (> VR1), and is a constant dead time compensation amount DTC2 when the inverter applying voltage VR is equal to or higher than the predetermined inverter applying voltage VR2. The dead time compensation amount DTC from the inverter applying voltage sensitive compensation amount calculating section 210 is inputted into the multiplying section 281.

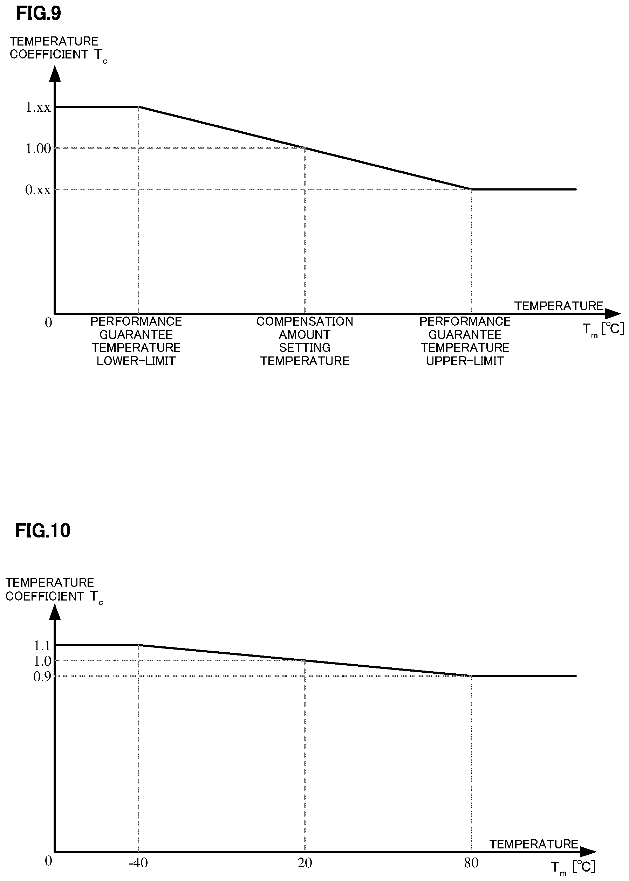

The temperature detecting section 400 detects (or estimates) the temperature of the control section (ECU), for example the temperature of the power device such as the FETs or the temperature in the neighborhood of the power device, and the detected temperature Tm is inputted into the temperature coefficient calculating section 280 in the dead time compensating section 200. As shown in FIG.9, the temperature coefficient calculating section 280 measures the required dead time compensation amounts at the three points that are a compensation amount setting temperature, a performance guarantee temperature upper-limit and a performance guarantee temperature lower-limit. By setting the value at the compensation amount setting temperature as a reference value "1.00", the ratio of the dead time compensation amount at the performance guarantee temperature upper-limit to that at the compensation amount setting temperature and the ratio of the dead time compensation amount at the performance guarantee temperature lower-limit to that at the compensation amount setting temperature are respectively calculated, and the temperature coefficient Tc is obtained. The temperature coefficient (the ratio) between the three points is obtained by a linear interpolation calculation or the table to the temperature Tm. The limit values of the temperature coefficients at the performance guarantee temperature upper-limit and the performance guarantee temperature lower-limit may be set. When the temperature characteristic of the control section is complicated, the contact points may increase and the curve interpolation table may be used. In a case that the characteristic example of the temperature coefficient Tc that the compensation amount setting temperature is set to "+20" degrees Celsius, the performance guarantee temperature lower-limit is set to "-40" degrees Celsius, the performance guarantee temperature upper-limit is set to "+80" degrees Celsius, the required dead time compensation amount at "-40" degrees Celsius increases 10% to the dead time compensation amount at "+20" degrees Celsius and the required dead time compensation amount at "+80" degrees Celsius decreases 10% to the dead time compensation amount at "+20" degrees Celsius, is set, the characteristic table of the temperature coefficient Tc is shown in FIG.10.

The temperature coefficient Tc from the temperature coefficient calculating section 280 is inputted into the multiplying section 281 and is multiplied by the dead time compensation amount DTC. The dead time compensation amount DTCb which is corrected by the temperature coefficient Tc is inputted into the multiplying section 202.

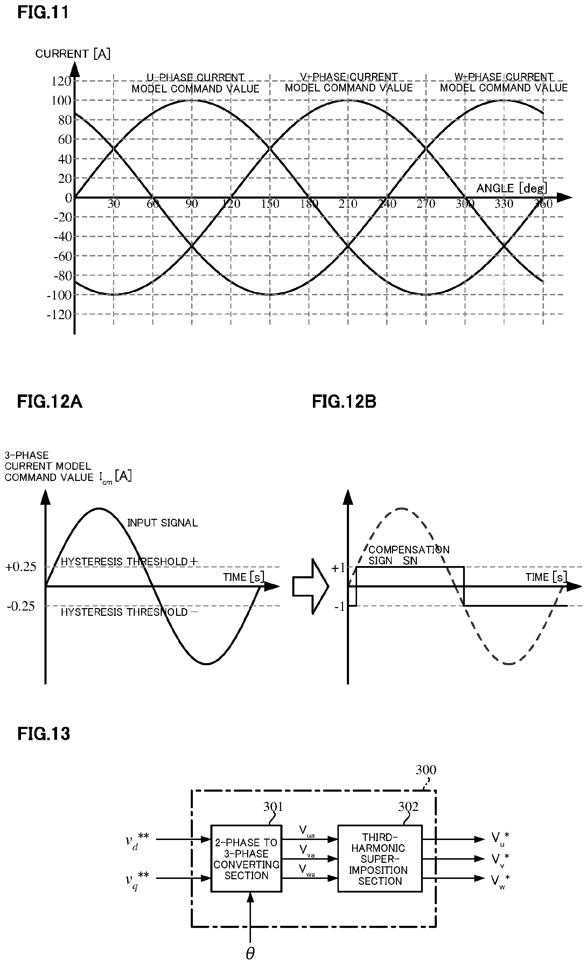

The d-phase current command value $i_d{}^*$, the q-phase current command value $i_q{}^*$ and the motor rotational angle $\theta_m$ are inputted into the 3-phase current command value model 220. The 3-phase current command value model 220 calculates the sinusoidal 3-phase current model command values $I_{cm}$ whose phases are shifted each other by 120 [deg] as shown in FIG.11, from the dq-phase current command values $i_d{}^*$ and $i_q{}^*$ and the motor rotational angle $\theta_m$ by the calculation or using the table (refer to the following Expressions 1 and 2). The 3-phase current model command values $I_{cm}$ are different depending on the motor type. The d-phase current command value $i_{ref\_d}$ and the q-phase current command value $i_{ref\_q}$ are converted into the 3-phase current command values (U-phase, V-phase and W-phase) using the motor electric angle $\theta_e$. The above conversion relationship is represented by the following Expression 1.

[Expression 1]

$$\begin{bmatrix} i_{ref\_u} \\ i_{ref\_v} \\ i_{ref\_w} \end{bmatrix} = \begin{bmatrix} \cos(\theta_e) & \sin(\theta_e) \\ \cos(\theta_e - \dfrac{2}{3}\pi) & \sin(\theta_e - \dfrac{2}{3}\pi) \\ \cos(\theta_e + \dfrac{2}{3}\pi) & \sin(\theta_e + \dfrac{2}{3}\pi) \end{bmatrix} \begin{bmatrix} i_{ref\_d} \\ i_{ref\_q} \end{bmatrix}$$

The respective phase current command values are calculated from the above Expression 1, and the U-phase current command value model $i_{ref\_u}$, the V-phase current command value model $i_{ref\_v}$ and the W-phase current command value model $i_{ref\_w}$ are represented by the following Expression 2.

[Expression 2]

$$i_{ref\_u} = i_{ref\_d} \cdot \cos(\theta_e) + i_{ref\_q} \cdot \sin(\theta_e)$$

$$i_{ref\_v} = i_{ref\_d} \cdot \cos(\theta_e - \frac{2}{3}\pi) + i_{ref\_q} \cdot \sin(\theta_e - \frac{2}{3}\pi)$$

$$i_{ref\_w} = i_{ref\_d} \cdot \cos(\theta_e + \frac{2}{3}\pi) + i_{ref\_q} \cdot \sin(\theta_e + \frac{2}{3}\pi)$$

The table may be stored in an electrically erasable and programmable read-only memory (EEPROM) or may be loaded to a random access memory (RAM). In using the Expression 2, only the values of "$\sin\theta_e$" are stored in the table. The values of "$\cos\theta_e$" may be calculated by offsetting the input $\theta_e$ to 90° and other sine function terms may be calculated by offsetting the input $\theta_e$ to 120°. In a case that the capacity of the ROM is sufficiently large or the command value model, for example, a model with respect to a pseudo rectangular wave motor or the like, is complicated, all the values in the Expression 2 are stored in the table.

The 3-phase current model command values $I_{cm}$ are inputted into the phase current compensation sign estimating section 221. The phase current compensation sign estimating section 221 outputs compensation signs SN, which have a positive value "+1" or a negative value "-1" and indicate a hysteresis characteristic shown in FIGs.12A and 12B, against the inputted 3-phase current model command values $I_{cm}$. The compensation signs SN are estimated based on zero cross points of the 3-phase current model command values $I_{cm}$ as a reference. In order to suppress the chattering, the compensation signs SN have the hysteresis characteristic. The estimated compensation signs SN are inputted into the multiplying section 202. Positive and negative thresholds in the hysteresis characteristic are appropriately changeable.

In a case that the signs of the dead time compensation values are simply determined from the current signs of the phase current command value model, the chattering is occurred in the low load. For example, when the handle is slightly steered to the left or the right near the on-center, the torque ripple is occurred. In order to improve this problem, the hysteresis is adopted in the sign judgement ($\pm 0.25$ [A] in FIGs.12A and 12B). In each of the 3-phase currents, the present compensation sign is held except for a case that the current is changed beyond the set current value and the current sign is changed, and the chattering is suppressed.

The dead time compensation amount DTCb from the multiplying section 281 is inputted into the multiplying section 202. The multiplying section 202 outputs the dead time compensation amounts DTCa (= DTCb $\times$ SN) that the dead time compensation amount DTCb is multiplied by the compensation signs SN. The dead time compensation amounts DTCa are inputted into the 3-phase to dq-phase converting section 240. The 3-phase to dq-phase converting section 240 outputs the 2-phase dead time compensation values $v_d^*$ and $v_q^*$ synchronized with the motor rotational angle $\theta_m$. The dead time compensation value $v_d^*$ and $v_q^*$ are added to the voltage command values $v_d$ and $v_q$ at the adding sections 121d and 121q, respectively, and the dead time compensation of the inverter 161 is performed.

In the present invention, the dead time of the inverter is compensated by converting the dq-phase current command values into the 3-phase current model command values, estimating the compensation signs, correcting the dead time compensation amount of the inverter obtained from the inverter applying voltage depending on the temperature of the control section, calculating the dead time compensation values based on the temperature-corrected dead time compensation amount and the compensation signs, and converting the dead time compensation values into 2-phase values and adding (feed-forwarding) the 2-phase values to the dq-phase voltage command values. The 3-phase current model command values are used for determining the compensation signs of the dead time, the dead time compensation amount is calculated from the inverter applying voltage VR and the compensation values are variable so that the magnitudes and directions of the compensation values are optimal depending on the magnitude of the current command values ($i_d^*$ and $i_q^*$) and the magnitude of the inverter applying voltage VR.

Next, the space vector modulation will be described. As shown in FIG.13, the space vector modulating section 300 may have a function that converts the 2-phase voltages $v_d^{**}$ and $v_q^{**}$ on the dq-phase space into the 3-phase voltages Vua, Vva and Vwa, superimposes the third-harmonic on the 3-phase voltages Vua, Vva and Vwa, and outputs the modulated 3-phase voltages $V_u^*$, $V_v^*$ and $V_w^*$. For example, the method of the space vector modulation that the applicant proposes in Japanese Unexamined Patent Publication No.2017-70066, WO/2017/098840 and the like may be used.

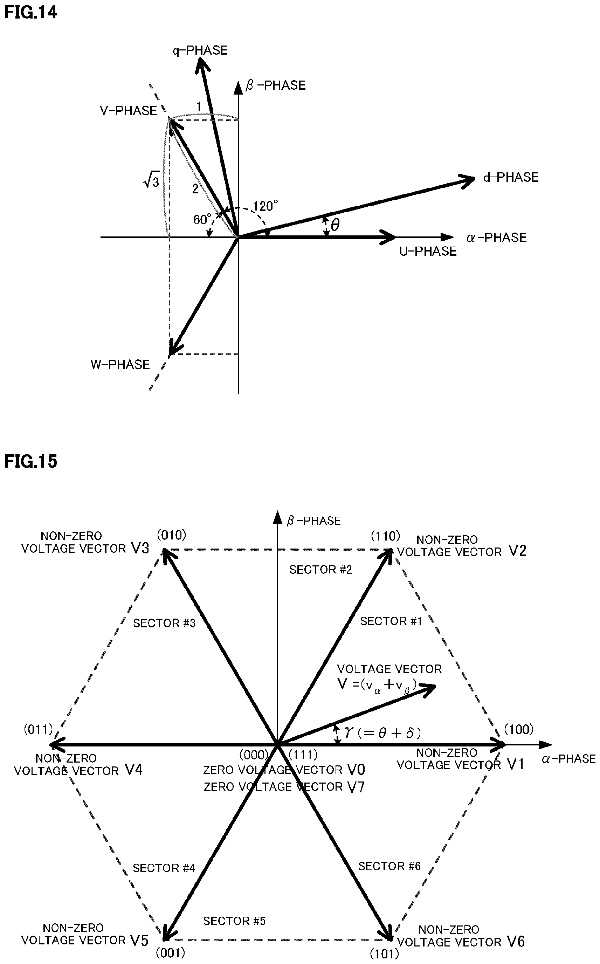

That is, the space vector modulation has a function that controls the rotation of the motor by performing a following coordinate transformation based on the voltage command values $v_d^{**}$ and $v_q^{**}$ on the dq-phase space, the motor rotational angle $\theta$ and a sector number n (#1 to #6), and supplying switching patterns S1 to S6, which control turning-ON/turning-OFF of the FETs (the upper-arm Q1, Q3 and Q5, and the lower-arm Q2, Q4 and Q6) of the inverter with the bridge configuration and are corresponding to the sectors #1 to #6, to the motor. With respect to the coordinate transformation, in the space vector modulation, the voltage command values $v_d^{**}$ and $v_q^{**}$ are coordinate-transformed into the voltage vectors V$\alpha$ and V$\beta$ in the $\alpha$-$\beta$ coordinate system based on an Expression 3. A relationship between the coordinate axes (the phases) that are used in this coordinate transformation and the motor rotational angle $\theta$ are shown in FIG.14.

[Expression 3]

$$\begin{bmatrix} V\alpha \\ V\beta \end{bmatrix} = \begin{bmatrix} \cos\theta & -\sin\theta \\ \sin\theta & \cos\theta \end{bmatrix} \begin{bmatrix} v_d^{**} \\ v_q^{**} \end{bmatrix}$$

A relationship shown in an Expression 4 between a target voltage vector in the d-q coordinate system and a target voltage vector in the $\alpha$-$\beta$ coordinate system is existed. The absolute value of the target voltage vector V is conserved.

[Expression 4]

$$|V| = \sqrt{\left(v_d^{**}\right)^2 + \left(v_q^{**}\right)^2} = \sqrt{V\alpha^2 + V\beta^2}$$

In the switching patterns of the space vector control, the output voltage of the inverter is defined by using eight discrete reference voltage vectors V0 to V7 (non-zero voltage vectors V1 to V6 that the phase differs every $\pi/3$ [rad] and zero voltage vectors V0 and V7) that are shown in the space vector diagram of FIG.15, depending on the switching patterns S1 to S6 of the FETs (Q1 to Q6). The selection of these reference output voltage vectors V0 to V7 and the occurring time of the selected reference output voltage vector are controlled by the switching patterns. By using six regions sandwiched between adjacent reference output voltage vectors, the space vector can be divided into the six sectors #1 to #6, the target voltage vector V is belong to any one of the sectors #1 to #6, and the sector number can be assigned to the target voltage vector V. The target voltage vector V is a synthetic vector of V$\alpha$ and V$\beta$ and there are six sectors in a regular hexagon of the $\alpha$-$\beta$ space, as shown in FIG.15. Which sector that the target voltage vector V exists can be determined based on the rotational angle $\gamma$ of the target voltage vector V in the $\alpha$-$\beta$ coordinate system. The rotational angle $\gamma$ is determined by a sum of the rotational angle $\theta$ of the motor and a phase $\delta$ obtained from the relationship of the voltage command values $v_d{}^{**}$ and $v_q{}^{**}$ in the d-q coordinate system ($\gamma = \theta + \delta$).

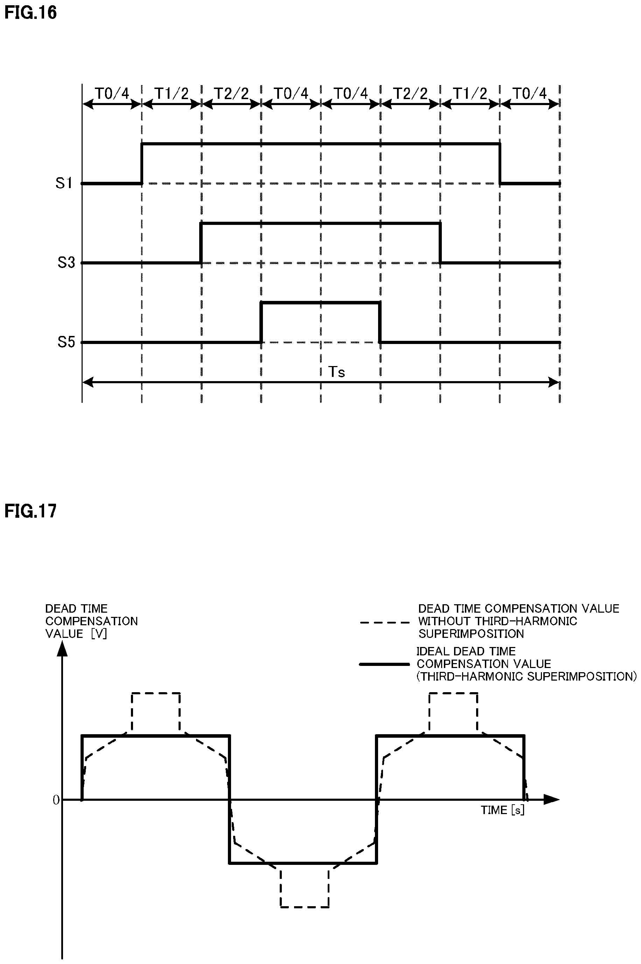

FIG.16 shows a basic timing chart that determines the switching pulse width and the timing in the turning-ON/turning-OFF signals S1 to S6 (switching patterns) to the FETs in order to output the target voltage vector V from the inverter by a digital control by means of the switching patterns S1, S3 and S5 of the inverter in the space vector control. The space vector modulation performs the calculation and the like in every defined sampling period Ts, transforms the calculation result into the respective pulse widths and the timings in the switching patterns S1 to S6 and outputs the transformed result in the next sampling period Ts.

The space vector modulation generates the switching patterns S1 to S6 depending on the sector number that is obtained based on the target voltage vector V. In FIG.16, in a case of the sector number #1 (n=1), one example of the FET switching patterns S1 to S6 of the inverter is shown. The signals S1, S3 and S5 show the gate signals of the FETs Q1, Q3 and Q5 that are corresponding to the upper-arm. The horizontal axis denotes a time, and Ts is corresponding to the switching period and is divided into eight periods, T0/4, T1/2, T2/2, T0/4, T0/4, T2/2, T1/2 and T0/4. The periods T1 and T2 are the time depending on the sector number n and the rotational angle $\gamma$.

In a case that the space vector modulation is not performed, the dead time compensation of the present invention is applied on the dq-phase, and the dead time compensation value waveform (the U-phase waveform) that the dq-phase to 3-phase conversion is performed to only the dead time compensation value is shown in a waveform represented by a dashed line of FIG.17 that the third-order component is removed. The same phenomena are exhibited in the V-phase and the W-phase. By applying the space vector modulation instead of the dq-phase to 3-phase conversion, the third-harmonic can be superimposed on the 3-phase signals, the third-order component that is removed by the 3-phase conversion can be compensated, and the ideal dead time compensation waveform that is shown by a solid line of FIG.17 can be generated.

FIGs.I8A to 23C show a simulation validation result performed in a testing apparatus of the present invention (the first embodiment). In the low load and the low speed steering condition (the motor applying voltage = 12[V], Iq = 8[A], Id = 0[A] and the motor rotational number = 120 [rpm]), simulations of "with the temperature correction" and "without the temperature correction" are performed. The temperature coefficient Tc in FIG.10 is used in the temperature characteristic of the control section.

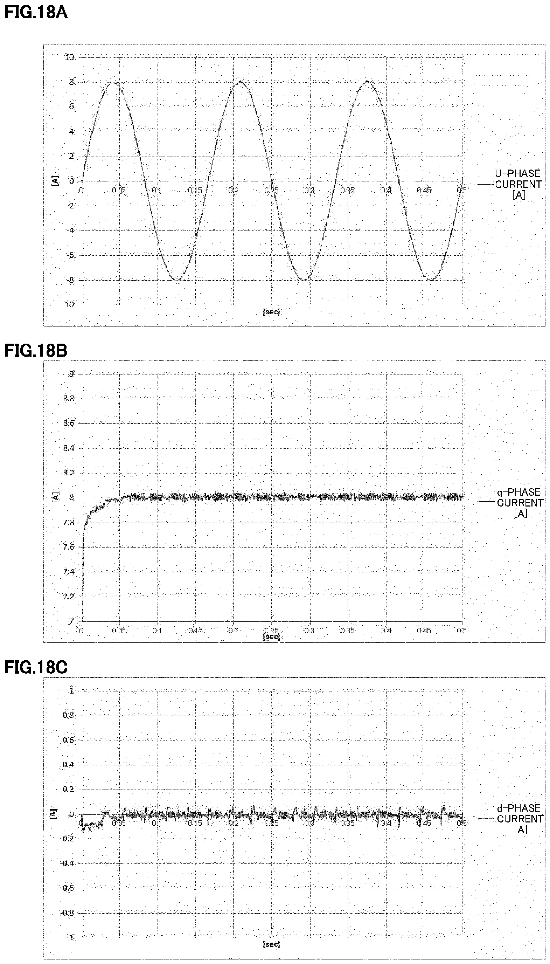

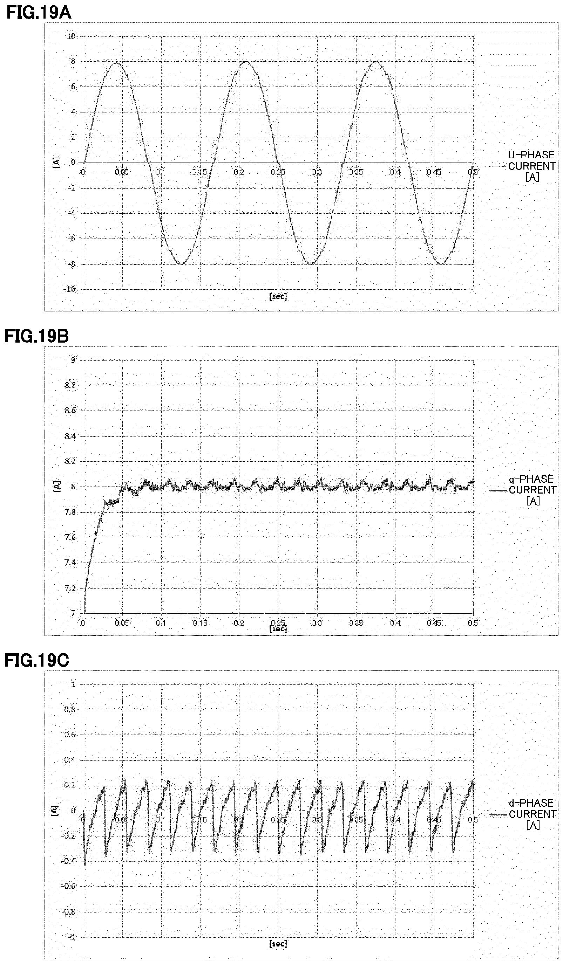

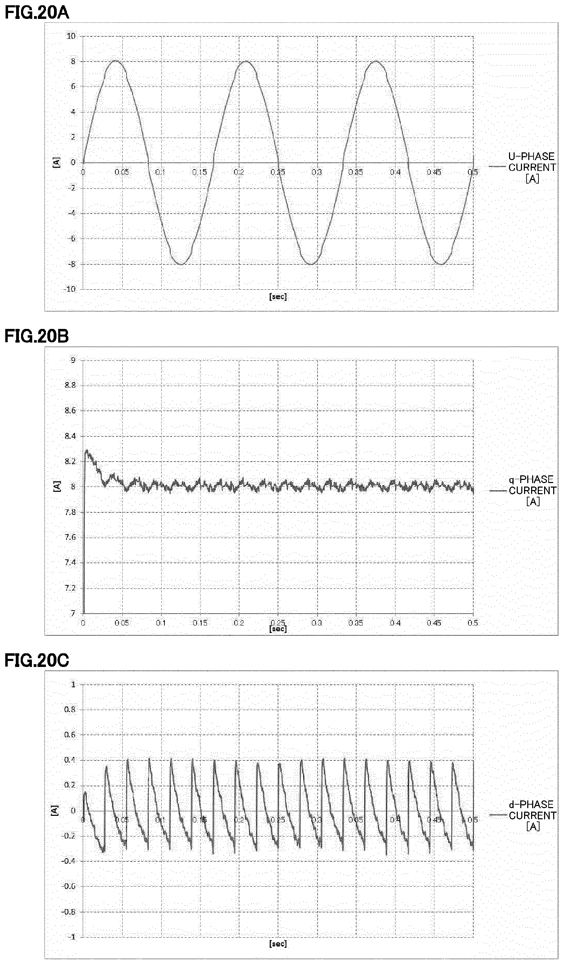

FIGs.18A to 20C show the current forms of "without the temperature correction". FIG.18A shows the U-phase current form of "without the temperature correction" at "+20" degrees Celsius, FIG.18B shows the q-phase current form of "without the temperature correction" at "+20" degrees Celsius, and FIG.18C shows the d-phase current form of "without the temperature correction" at "+20" degrees Celsius. As shown in FIGs.18A, 18B and 18C, because the compensation amount is appropriate in the "+20" degrees Celsius temperature condition, the distortion of the U-phase current waveform due to the dead time is hardly recognized. FIG. 19A shows the U-phase current form of "without the temperature correction" at "-40" degrees Celsius, FIG.19B shows the q-phase current form of "without the temperature correction" at "-40" degrees Celsius, and FIG.19C shows the d-phase current form of "without the temperature correction" at "-40" degrees Celsius. As shown in FIGs.19A, 19B and 19C, because of the shortage of the compensation amount in the "-40" degrees Celsius temperature condition, the concave distortion is existed near 0[A] in the U-phase current, the waveshape distortion is occurred in the q-phase current, and the sawtooth-shape distortion is occurred in the d-phase current. FIG.20A shows the U-phase current form of "without the temperature correction" at "+80" degrees Celsius, FIG.20B shows the q-phase current form of "without the temperature correction" at "+80" degrees Celsius, and FIG.20C shows the d-phase current form of "without the temperature correction" at "+80" degrees Celsius. As shown in FIGs.20A, 20B and 20C, because of too large compensation amount in the "+80" degrees Celsius temperature condition, the convex distortion is existed near 0[A] in the U-phase current, the wave-shape distortion is occurred in the q-phase current, and the sawtooth-shape distortion is occurred in the d-phase current.

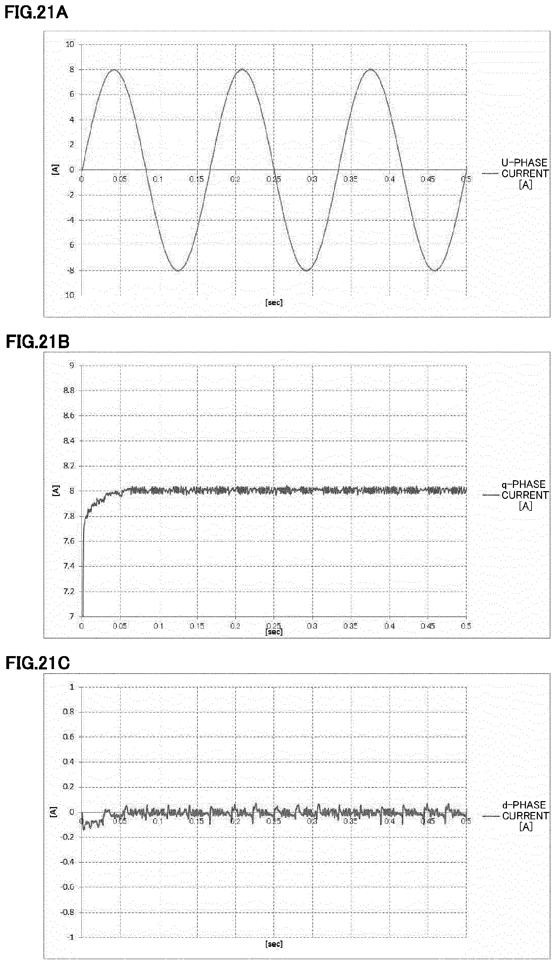

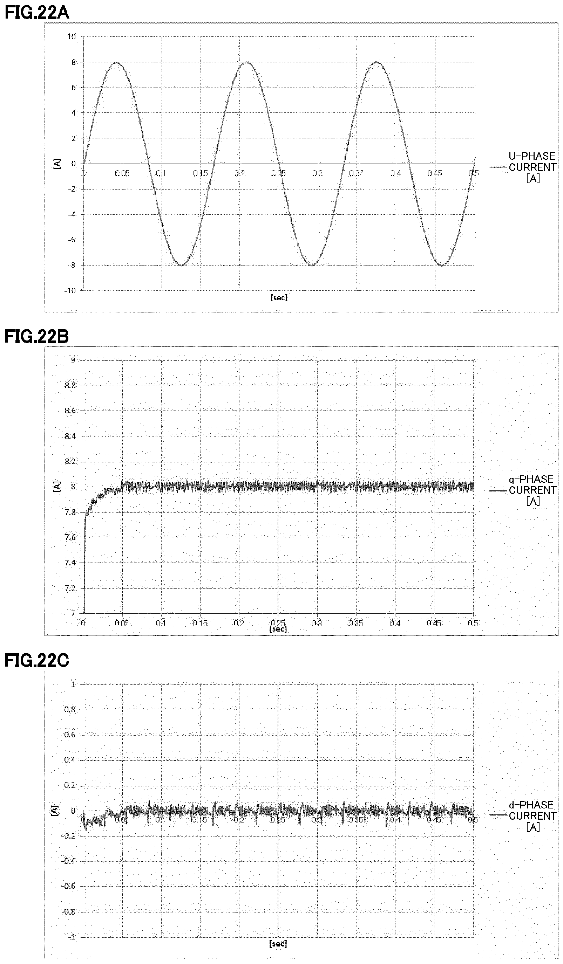

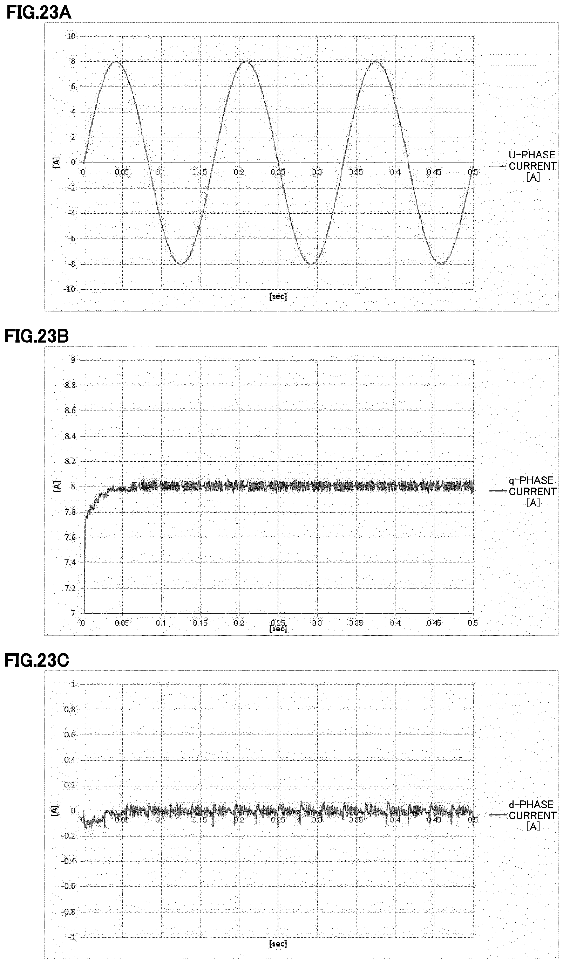

In contrast, FIGs.21A to 23C show the current forms of "with the temperature correction". FIG.21A shows the U-phase current form of "with the temperature correction" at "+20" degrees Celsius, FIG.21B shows the q-phase current form of "with the temperature correction" at "+20" degrees Celsius, and FIG.18C shows the d-phase current form of "with the temperature correction" at "+20" degrees Celsius. As shown in FIGs.21A, 21B and 21C, because of applying the temperature correction and correcting the compensation amount depending on the temperature, the distortion due to the dead time is hardly recognized in the "+20" degrees Celsius temperature condition as well as a case of not applying the temperature correction in the "+20" degrees Celsius temperature condition. An adverse influence due to applying the temperature correction is not shown. FIG.22A shows the U-phase current form of "with the temperature correction" at "-40" degrees Celsius, FIG.22B shows the q-phase current form of "with the temperature correction" at "-40" degrees Celsius, and FIG.22C shows the d-phase current form of "with the temperature correction" at "-40" degrees Celsius. As shown in FIGs.22A, 22B and 22C, because of applying the temperature correction of the present invention and correcting the compensation amount depending on the temperature, improvements in the waveform distortions in the U-phase current, the d-phase current and the q-phase current (the ripples in the d-phase current waveform and the q-phase current waveform are reduced and the 3-phase current waveforms are almost sinusoidal) can be confirmed and the torque ripple is also improved in the "-40" degrees Celsius temperature condition. FIG.23A shows the U-phase current form of "with the temperature correction" at "+80" degrees Celsius, FIG.23B shows the q-phase current form of "with the temperature correction" at "+80" degrees Celsius, and FIG.23C shows the d-phase current form of "with the temperature correction" at "+80" degrees Celsius. As shown in FIGs.23A, 23B and 23C, because of applying the temperature correction of the present invention and correcting the compensation amount depending on the temperature, improvements in the waveform distortions in the U-phase current, the d-phase current and the q-phase current (the ripples in the d-phase current waveform and the q-phase current waveform are reduced and the 3-phase current waveforms are almost sinusoidal) can be confirmed and the torque ripple is also improved in the +80 degrees Celsius temperature condition.

In FIGs.l8A, 19A, 20A, 21A, 22A and 23A, only the U-phase current waveform is typically shown, and the same phenomena are confirmed in the V-phase and W-phase current waveforms.

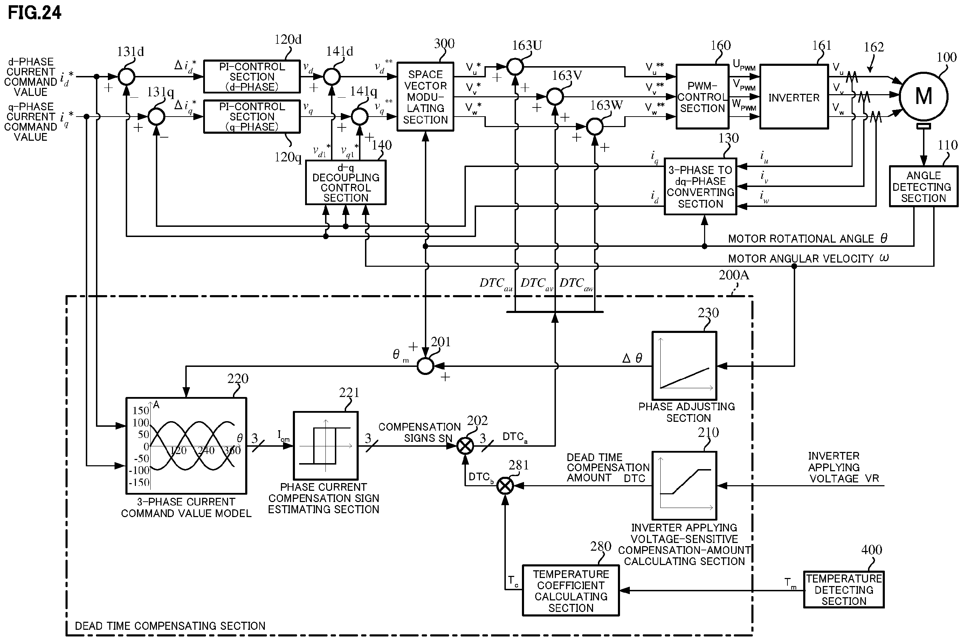

Next, the second embodiment which compensate the dead time by adding (feed-forwarding) the dead time compensation values based on the estimated compensation signs to the 3-phase voltage command values will be described with reference to FIG.24 corresponding to FIG.5.

In the second embodiment shown in FIG.24, the dead time compensating section 200A does not include the 3-phase to dq-phase converting section 240, and thus the adding sections 121d and 121q on the dq-phase are not existed. In the second embodiment, to add (feed-forward) the dead time compensation values based on the estimated compensation signs to the 3-phase voltage command values, there are provided adding sections 163U, 163V and 163W between the space vector modulating section 300 and the PWM-control section 160. The 3-phase dead time compensation values $DTC_a$ ($DTC_{au}$, $DTC_{av}$ and $DTC_{aw}$) which are multiplied the dead time compensation amount $DTCb$ by the compensation signs $SN$ at the multiplying section 202 are respectively inputted into the adding sections 163U, 163V and 163W, and the added voltage command values $V_u^{**}$, $V_v^{**}$ and $V_w^{**}$ in which the dead time compensation is performed are inputted into the PWM-control section 160. The following control operations are the same as those of the first embodiment.

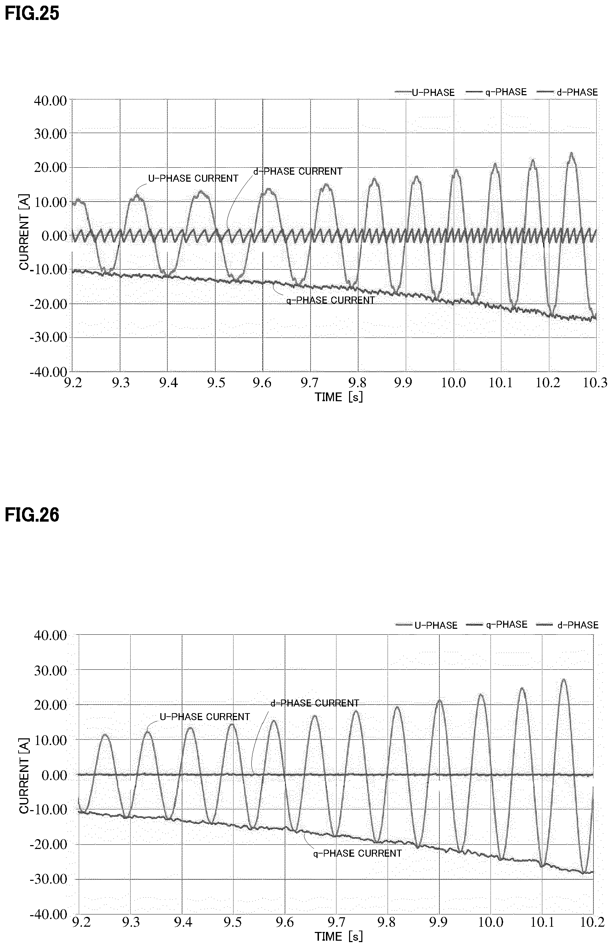

The characteristics and the operations of the inverter applying voltage-sensitive compensation-amount calculating section 210, the 3-phase current command value model 220, the phase current compensation sign estimating section 221, the phase adjusting section 230 and the temperature coefficient calculating section 280 are similar to those of the first embodiment. The effects of the second embodiment are shown in FIGs.25 and 26. In FIGs.25 and 26, only the U-phase current is typically shown.

In the above-described embodiments, the column type electric power steering apparatus is described. The present invention can similarly be applied to the downstream type electric power steering apparatus.

Explanation of Reference Numerals

| | |
|---|---|
| 1 | handle (steering wheel) |
| 2 | column shaft (steering shaft, handle shaft) |
| 10 | torque sensor |
| 12 | vehicle speed sensor |
| 13 | battery |
| 20, 100 | motor |
| 30 | control unit (ECU) |
| 31 | steering assist command value calculating section |
| 35, 203, 204 | PI-control section |
| 36, 160 | PWM-control section |
| 37, 161 | inverter |
| 110 | angle detecting section |
| 130 | 3-phase to dq-phase converting section |
| 140 | d-q decoupling control section |

| | |
|---|---|
| 200, 200A | dead time compensating section |
| 210 | inverter applying voltage-sensitive compensation-amount calculating section |
| 220 | 3-phase current command value model |
| 221 | phase current compensation sign estimating section |
| 230 | phase adjusting section |
| 240 | 3-phase to dq-phase converting section |
| 280 | temperature coefficient calculating section |
| 300 | space vector modulating section |
| 301 | 2-phase to 3-phase converting section |
| 302 | third-harmonic superimposition section |
| 400 | temperature detecting section |

**Claims**

1. A vector-control type electric power steering apparatus that converts dq-phase current command values calculated based on at least a steering torque into 3-phase duty command values, drives and controls a 3-phase brushless motor by a pulse width modulation (PWM) controlled inverter, and applies an assist torque to a steering mechanism of a vehicle, comprising:

   a temperature coefficient calculating section to calculate a temperature coefficient depending on a temperature of a control section including said inverter,
   wherein a dead time compensation of said inverter is performed by estimating compensation signs of 3-phase current model command values in which said dq-phase current command values are converted into a 3-phase current command value model, calculating a first dead time compensation amount based on an inverter applying voltage, calculating a second dead time compensation amount by multiplying said first dead time compensation amount by said temperature coefficient, and adding dead time compensation values in which values multiplied said second dead time compensation amount by said compensation signs are converted into 2-phase values, to dq-phase voltage command values.

2. A vector-control type electric power steering apparatus that converts dq-phase current command values calculated based on at least a steering torque into 3-phase voltage command values, calculates duty command values based on said 3-phase voltage command values, drives and controls a 3-phase brushless motor by a pulse width modulation (PWM) controlled inverter, and applies an assist torque to a steering mechanism of a vehicle, comprising:

   a temperature coefficient calculating section to calculate a temperature coefficient depending on a temperature of a control section including said inverter,
   wherein a dead time compensation of said inverter is performed by estimating compensation signs of 3-phase current model command values in which said dq-phase current command values are converted into a 3-phase current command value model, calculating a first dead time compensation amount based on an inverter applying voltage, calculating a second dead time compensation amount by multiplying said first dead time compensation amount by said temperature coefficient, and adding dead time compensation values in which said second dead time compensation amount is multiplied by said compensation signs, to 3-phase voltage command values.

3. The vector-control type electric power steering apparatus according to Claim 1 or 2, wherein said inverter is constituted by a bridge circuit of field-effect transistors (FETs) and said temperature is a temperature of said FETs or a temperature in the neighborhood of said FETs.

4. The vector-control type electric power steering apparatus according to any one of Claims 1 to 3, wherein said temperature coefficient calculating section measures required dead time compensation amounts at three points that are a compensation amount setting temperature, a performance guarantee temperature upper-limit and a performance guarantee temperature lower-limit, by setting a value of said compensation amount setting temperature as a reference value, calculates a ratio of said dead time compensation amount at said performance guarantee temperature upper-limit to said reference value and a ratio of said dead time compensation amount at said performance guarantee temperature lower-limit to said reference value, respectively, and calculates said temperature coefficient.

5. The vector-control type electric power steering apparatus according to Claim 4, wherein limit values of said temperature coefficients at said performance guarantee temperature upper-limit and said performance guarantee temperature lower-limit are set.

6.  The vector-control type electric power steering apparatus according to Claim 4 or 5, wherein said temperature coefficient between said three points is obtained by linear interpolation calculation or a data table to said temperature.

FIG.1

| | | |
|---|---|---|
| | 41 | 40 |
| | NON-CAN | CAN |

1

2

14 STEERING ANGLE SENSOR

10 TORQUE SENSOR

3 REDUCTION GEARS

θ

Th

VEHICLE SPEED SENSOR 12

Vs

MOTOR 20

30

11

CONTROL UNIT (ECU)

Vref

4a

4b

13 BATTERY

6a

5

6b

7a

7b

8L

8R

**PRIOR ART**

## FIG.2

PRIOR ART

FIG.3

d-PHASE CURRENT COMMAND VALUE $i_d^*$

q-PHASE CURRENT COMMAND VALUE $i_q^*$

131d  $\Delta i_d^*$  PI-CONTROL SECTION (d-PHASE) 120d  $v_d$  141d  $\Delta v_d$

131q  $\Delta i_q^*$  PI-CONTROL SECTION (q-PHASE) 120q  $v_q$  141q  $\Delta v_q$

$v_{d1}^*$  $v_{q1}^*$  140  d-q DECOUPLING CONTROL SECTION

150  dq-PHASE TO 3-PHASE CONVERTING SECTION  $V_u^*$  $V_v^*$  $V_w^*$

160  PWM-CONTROL SECTION  $U_{PWM}$  $V_{PWM}$  $W_{PWM}$

161  INVERTER  $V_u$  $V_v$  $V_w$

162  100  M

110  ANGLE DETECTING SECTION

$\theta$  $\omega$

130  3-PHASE TO dq-PHASE CONVERTING SECTION  $i_q$  $i_d$  $i_u$  $i_v$  $i_w$

PRIOR ART

EP 3 675 351 A1

**FIG.4**

U-PHASE

V-PHASE

W-PHASE

**PRIOR ART**

# FIG.5

**FIG.6**

PHASE
ADJUSTMENT
ANGLE $\Delta \theta$

MOTOR ANGULAR VELOCITY $\omega$

0

**FIG.7**

211

INVERTER APPLYING
VOLTAGE VR

INPUT LIMITING
SECTION

$VR_I$

212

INVERTER APPLYING
VOLTAGE/DEAD TIME
COMPENSATION-AMOUNT
CONVERSION TABLE

DEAD TIME
COMPENSATION
AMOUNT DTC

**FIG.8**

DEAD TIME
COMPENSATION
AMOUNT DTC

DTC2

DTC1

0          VR1          VR2

INVERTER APPLYING
VOLTAGE $VR_I$ [V]

## FIG.9

TEMPERATURE
COEFFICIENT $T_c$

1.xx

1.00

0.xx

0

TEMPERATURE
$T_m$ [°C]

PERFORMANCE
GUARANTEE
TEMPERATURE
LOWER-LIMIT

COMPENSATION
AMOUNT
SETTING
TEMPERATURE

PERFORMANCE
GUARANTEE
TEMPERATURE
UPPER-LIMIT

## FIG.10

TEMPERATURE
COEFFICIENT $T_c$

1.1
1.0
0.9

0

-40

20

80

TEMPERATURE
$T_m$ [°C]

**FIG.11**

**FIG.12A**

**FIG.12B**

**FIG.13**

**FIG.14**

**FIG.15**

**FIG.16**

**FIG.17**

DEAD TIME
COMPENSATION
VALUE [V]

DEAD TIME COMPENSATION VALUE
– – – WITHOUT THIRD–HARMONIC
SUPERIMPOSITION

IDEAL DEAD TIME
—— COMPENSATION VALUE
(THIRD–HARMONIC SUPERIMPOSITION)

TIME [s]

**FIG.18A**

**FIG.18B**

**FIG.18C**

**FIG.19A**

U-PHASE
CURRENT
[A]

**FIG.19B**

q-PHASE
CURRENT
[A]

**FIG.19C**

d-PHASE
CURRENT
[A]

**FIG.20A**

U-PHASE CURRENT [A]

**FIG.20B**

q-PHASE CURRENT [A]

**FIG.20C**

d-PHASE CURRENT [A]

**FIG.21A**

**FIG.21B**

**FIG.21C**

**FIG.22A**

**FIG.22B**

**FIG.22C**

**FIG.23A**

**FIG.23B**

**FIG.23C**

# FIG.24

EP 3 675 351 A1

**FIG.25**

**FIG.26**

**EP 3 675 351 A1**

## INTERNATIONAL SEARCH REPORT

| International application No. |
|---|
| PCT/JP2019/001003 |

**A. CLASSIFICATION OF SUBJECT MATTER**

Int.Cl. H02P21/05(2006.01)i, H02P27/08(2006.01)i

According to International Patent Classification (IPC) or to both national classification and IPC

**B. FIELDS SEARCHED**

Minimum documentation searched (classification system followed by classification symbols)

Int.Cl. H02P21/05, H02P27/08

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | WO 2018/016356 A1 (NSK LTD.) 25 January 2018, claims 1-2 & JP 2018-153091 A, claim 1 & JP 2018-153090 A, claim 1 | 1-3<br>4-6 |
| Y | JP 11-27951 A (HITACHI, LTD.) 29 January 1999, paragraphs [0009]-[0029] (Family: none) | 1-3 |
| A | JP 2000-134987 A (DENSO CORP.) 12 May 2000, entire text, all drawings (Family: none) | 4-6 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 April 2019 (11.04.2019) | 23 April 2019 (23.04.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4681453 B
- JP 2015171251 A
- JP 2017070066 A
- WO 2017098840 A